# EUROPÄISCHE PATENTSCHRIFT

(11) **EP 0 922 956 B1**
(45) Veröffentlichungstag und Bekanntmachung des Hinweises auf die Patenterteilung: **27.07.2005**
(21) Anmeldenummer: 98117584.7
(22) Anmeldetag: 16.09.1998
(51) Int. Cl.: G01N 27/62

(54) **Flammenionisationsdetektor**
Flame ionisation detector
Détecteur à ionisation de flamme

(30) Priorität: 13.12.1997 DE 19755555
(43) Veröffentlichungstag der Anmeldung: 16.06.1999
(73) Patentinhaber: Pierburg Instruments GmbH, 41460 Neuss (DE)
(72) Erfinder: Garthe, Christopher, 40237 Düsseldorf (DE)
(74) Vertreter: Ter Smitten, Hans

(56) Entgegenhaltungen:
- EP-A- 0 723 154
- EP-A- 0 763 733
- GB-A- 1 451 795
- GB-A- 2 138 997
- US-A- 3 938 956
- US-A- 4 410 854

## Beschreibung

Die Erfindung betrifft einen Flammenionisationsdetektor nach dem Oberbegriff des Patentanspruchs 1.

Ein solcher Flammenionisationsdetektor wird seit langem unter anderem für die Messung der Kohlenwasserstoffkonzentration im Automobilabgas verwendet und ist in der Druckschrift 'Emissions- und Immissionsmeßtechnik im Verkehrswesen', Verlag TÜV Rheinland, Druck 1993, Seite 214 beschrieben. *Des weiteren ist ein derartiger Flammenionisationsdetektor aus der EP 723 154 A2 bekannt.*

*Ein Flammenionisationsdetektor mit einer Grundplatte, in der Brenngas- und Meßgaskanäle vereinigt sind, ist aus der US 4,410,854 bekannt.*

Das Meßprinzip des Flammenionisationsdetektors beruht darauf, daß in einer Wasserstoffflamme aus den Kohlenwasserstoffmolekülen Ionen gebildet werden. Die Flamme brennt zwischen zwei Elektroden, an denen eine Gleichspannung liegt. Die Brennluft und das Brenngas (H₂ oder H₂/He-Gemisch) werden dem Brenner getrennt zugeführt. Die Abgasprobe wird dem Brenngas vor der Brennerdüse zugemischt. Die in der Flamme entstehenden Ionen bewirken einen Ladungstransport, der als Ionenstrom meßbar ist.

Die Anordnung der Elektroden insgesamt mit der notwendigen Isolierung, Verschraubung usw. führt zu einem hohen mechanischen Bauaufwand, der hohe Fertigungskosten verursacht. Darüber hinaus stand diese Anordnung der Elektroden einer Ausführung mit mehreren Meßgaskanälen entgegen, mit der gleichzeitig zum Beispiel Kohlenwasserstoff- und der Methangehalt im Autoabgas gemessen werden kann.

Es war daher Aufgabe der Erfindung, einen gattungsgemäßen Flammenionisationsdetektor derart zu gestalten, daß geringere Fertigungskosten und ein vereinfachter Aufbau erreicht werden, so daß ggf. auch über separate Meßgasanschlüsse vorgesehen werden können, über die mehrere Abgasbestandteile im Meßgas separat gemessen werden können. Darüber hinaus sollte die Baugröße minimiert werden und ein geringer Montageaufwand anfallen.

Diese Aufgabe ist durch die im Kennzeichen des Anspruchs 1 genannten Merkmale gelöst worden. Vorteilhafte Weiterbildungen sind mit den Unteransprüchen angegeben.

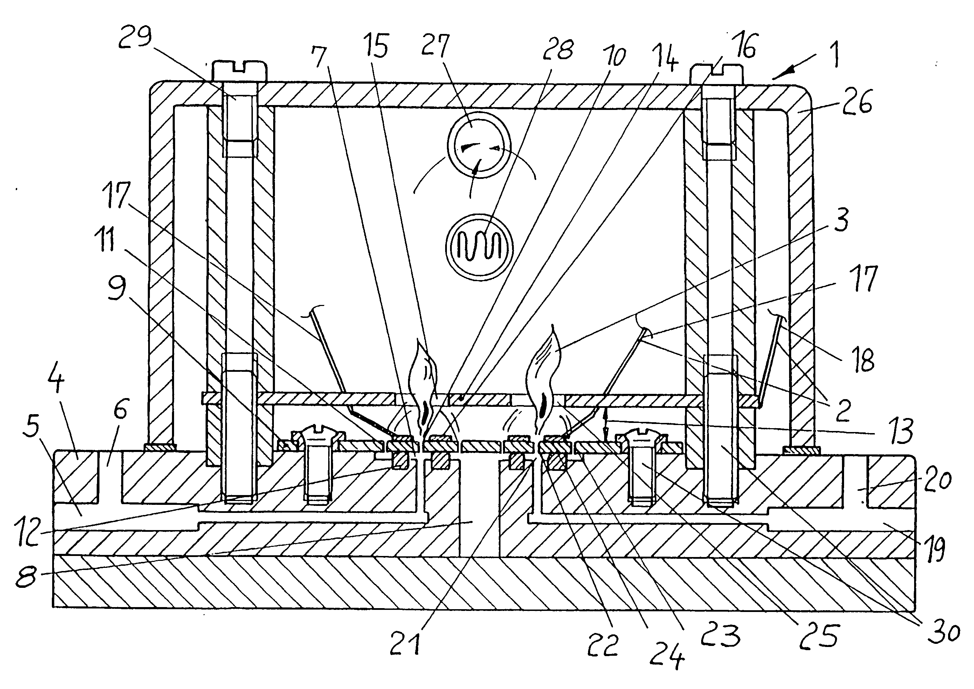

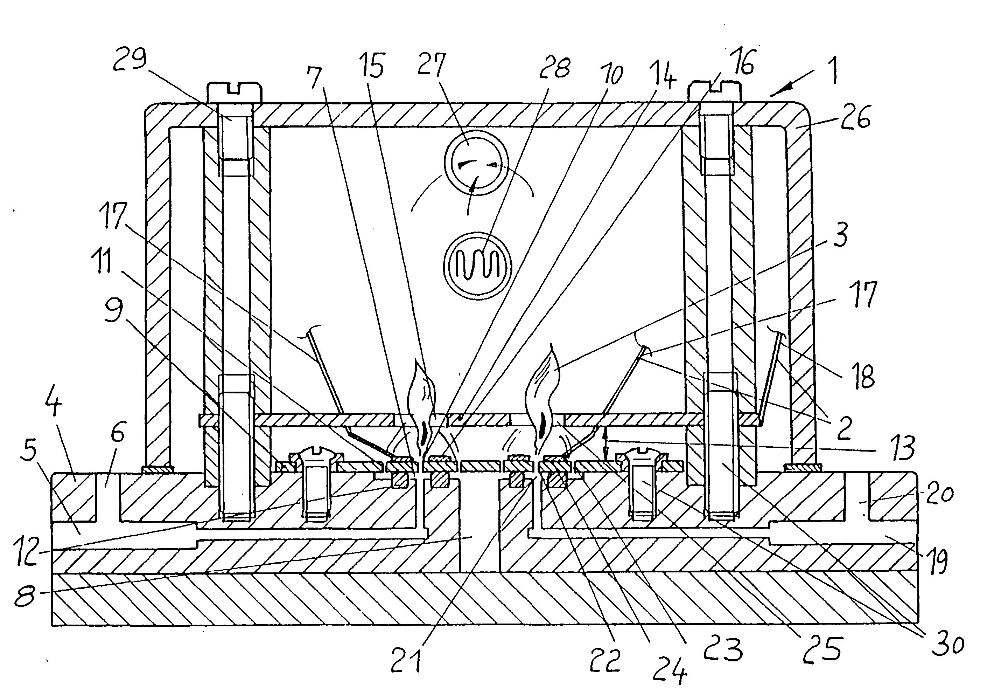

Ein Ausführungsbeispiel der Erfindung ist in der Zeichnung dargestellt und wird nachfolgend beschrieben.

Diese zeigt einen Schnitt eines Flammenionisationsdetektor 1 mit isoliert angeordnetem Elektrodenpaar 2, an dem eine Gleichspannung anliegt und zwischen dem eine Wasserstoffflamme 3 brennt, der das Meßgas -insbesondere Automobilabgaszugeführt ist, wobei die dabei entstehenden Ionen einen Ladungstransport verursachen, der als Ionenstrom gemessen wird.

Der Flammenionisationsdetektor 1 besteht aus einer Grundplatte 4, die Brenngas- und Meßgaskanäle 5 und 6 aufweist, die sich vor einer zentralen Austrittsstelle 7 vereinigen, an der *desweiteren* ein Brennluftkanal 8 ausmündet.

Die Austrittsstelle 7 ist durch eine Keramikplatte 9 abgedeckt, die eine Brenn-/*Meß*gasdüsenöffnung 10 und um diese herum angeordnete Brennluftdüsenöffnungen 11 aufweist. Ein Dichtring 12 dichtet die Brenn-/*Meß*gasdüsenöffnung 10 gegenüber den Brennluftdüsenöffnungen 11 und die Brenngas- und Brennluftkanäle 5 und 8 gegeneinander ab.

Desweiteren weist die Ausführung eine mit einem ausgewählten Abstand 13 zur Keramikplatte 9 angeordnete Metallplatte 14 auf, die eine über der Brenn-/*Meß*gasdüsenöffnung 10 liegende Öffnung 15 aufweist, in der die Flamme 3 brennt. Die Metallplatte 14 kann aus einer Edelstahllegierung oder Leichtmetall bestehen und ist elektrisch isoliert angebracht.

Es ist vorgesehen, daß die Brenn-/*Meß*gasdüsenöffnung 10 von einer Signalelektrode 16 umgeben ist, die als Leiterbahn auf der Keramikplatte 9 besteht und mit einem Meßsignalausgang 17 verbunden ist. Die Metallplatte 14 ist als Saugelektrode mit einem Gleichspannungsanschluß 18 verbunden.

Es ist vorgesehen, daß die Leiterbahn aufgetragen, aufgedampft, aufgedruckt oder als ausgestanzter Leiter auf der Keramikplatte 9 befestigt ist. Es ist als Vorteil herauszustellen, daß die Meßgaskanäle auch mit einer gleichen Meßgasquelle zur Messung einer bestimmten Verbindung verbunden und die Signalelektrodenausgänge zusammengeschaltet werden können.
Hierdurch läßt sich die Meßgenauigkeit in bezug auf diese bestimmte Kohlenwasserstoffverbindung erhöhen.

Der Flammenionisationsdetektor 1 zeigt in der Zeichnung desweiteren einen Deckel 26, der einen Abgasabführkanal 27 in die Atmosphäre aufweist, sowie eine Zündkerze 28, mittels der die Flamme 3 bei Inbetriebnahme des Detektors 1 gezündet wird. Aus Sicherheitsgründen kann die Ausführung einen Flammensensor zur Erkennung, ob die Flamme brennt, aufweisen. Der Flammenionisationsdetektor 1 läßt sich durch Lösen von Deckelschrauben 29 leicht öffnen, Metallplatte 14 und Keramikplatte 19 sind ebenfalls durch Lösen von Schraubelementen 30 leicht auszubauen. Alle Bauteile sind von oben zugänglich.

Insgesamt liegt mit dem erfindungsgemäßen Flammenionisationsdetektor 1 eine kostengünstig herstellbare Ausführung vor, die den zukünftigen Anforderungen der Abgasschadstoffreduzierung gerecht wird.

## Patentansprüche

1. Flammenionisationsdetektor mit isoliert angeordnetem Elektrodenpaar, an dem eine Gleichspannung anliegt und zwischen dem eine Wasserstoffflamme brennt, der das Meßgas -insbesondere Automobilabgas- zugeführt ist, wobei die dabei entstehenden Ionen einen Ladungstransport verursachen, der als Ionenstrom gemessen wird, **dadurch gekennzeichnet, daß** eine Detektorgrundplatte (4) Brenngas- und Meßgaskanäle (5 und 6) aufweist, die sich vor einer zentralen Austrittsstelle (7) vereinigen, an der *desweiteren* ein Brennluftkanal (8) ausmündet, *wobei die Austrittsstelle (7)* durch eine Keramikplatte (9) abgedeckt ist, und *wobei die Keramikplatte (9)* eine Brenn-/*Meß*gasdüsenöffnung (10), *die fluidisch mit der Austrittsstelle (7) verbunden ist* und um diese herum angeordnete Brennluftdüsenöffnungen (11), *die fluidisch mit dem Brennluftkanal (8) verbunden sind,* aufweist, daß eine mit einem ausgewählten Abstand (13) zur Keramikplatte (9) angeordnete Metallplatte (14) eine über der Brenn-/*Meß*gasdüsenöffnung (10) liegende Öffnung (15) aufweist, in der die Flamme (3) brennt und daß die Brenn-/*Meß*gasdüsenöffnung (10) von einer Signalelektrode (16) umgeben ist, die als Leiterbahn auf der Keramikplatte (9) besteht und mit einem Meßsignalausgang (17) verbunden ist und die Metallplatte (14) als Saugelektrode mit einem Gleichspannungsanschluß (18) Verbunden ist.

2. Flammenionisationsdetektor nach Anspruch 1, **dadurch gekennzeichnet, daß** wenigstens ein weiterer Brenngas- und Meßgaskanal (19 und 20) vorgesehen sind sowie eine weitere Austrittsstelle (21), die von der Keramikplatte (9) abgedeckt ist, die hierfür eine weitere Brenn-/*Meß*gasdüsenöffnung (22), Brennluftdüsenöffnungen (23) und eine separate Signalelektrode (24) aufweist, wobei die Metallplatte (14) eine weitere Öffnung (25) aufweist, in der die Flamme (3) brennt.

3. Flammenionisationsdetektor nach Anspruch 1 oder 2, **dadurch gekennzeichnet, daß** die die Signalelektrode (16, 24) bildende Leiterbahn aufgetragen, aufgedampft, aufgedruckt oder als ausgestanzter Leiter auf der Keramikplatte (9) befestigt ist.

4. Flammenionisationsdetektor nach Anspruch 2 oder 3, **dadurch gekennzeichnet, daß** die Meßgaskanäle (6, 20) mit einer gleichen Meßgasquelle verbunden sind und die Signalelektrodenausgänge (17) zusammengeschaltet sind.

## Claims

1. Flame ionisation detector with an electrode pair arranged in an insulated manner, to which a direct voltage is applied and between which burns a hydrogen flame to which the measurement gas, in particular automobile exhaust gas, is fed, whereby the ions that are thereby formed produce a charge transport that is measured as an ion current, **characterised in that** a detector base plate (4) comprises combustible gas and measurement gas channels (5, 6) that combine before a central outlet point (7) at which furthermore a combustible air channel (8) terminates, wherein the outlet point (7) is covered by a ceramics plate (9) and wherein the ceramics plate (9) comprises a combustible gas/measurement gas nozzle opening (10) that is connected in a fluid manner to the outlet point (7) and also comprises combustible air nozzle openings (11) arranged around the latter that are connected in a fluid manner to the combustible air channel (8), that a metal plate (14) arranged at a selected distance (13) from the ceramics plate (9) comprises an opening (15) lying above the combustible gas/measurement gas nozzle opening (10), in which opening (15) the flame (3) burns, and that the combustible gas/measurement gas nozzle opening (10) is surrounded by a signal electrode (16) that is formed as a conducting path on the ceramics plate (9) and is connected to a measurement signal output (17), and the metal plate (14) is connected as suction electrode to a direct voltage connection (18).

2. Flame ionisation detector according to claim 1, **characterised in that** at least one further combustible gas and measurement gas channel (19, 20) are provided, as well as a further outlet point (21) that is covered by the ceramics plate (9), which comprises for this purpose a further combustible gas/measurement gas nozzle opening (22), combustible air nozzle openings (23) and a separate signal electrode (24), the metal plate (14) comprising a further opening (25) in which the flame (3) burns.

3. Flame ionisation detector according to claim 1 or 2, **characterised in that** the conducting path forming the signal electrode (16, 24) is applied, vapour deposited, imprinted or secured as a stamped-out conductor on the ceramics plate (9).

4. Flame ionisation detector according to claim 2 or 3, **characterised in that** the measurement gas channels (6, 20) are connected to the same measurement gas source and the signal electrode outputs (17) are connected together.

## Revendications

1. Détecteur à ionisation de flamme comprenant une paire d'électrodes disposée de manière isolée, à laquelle est appliquée une tension continue et entre laquelle brûle une flamme d'hydrogène à laquelle est envoyé le gaz de mesure - en particulier des gaz d'échappement d'automobile -, les ions ainsi formés provoquant un transport de charges qui est mesuré sous forme de courant ionique, **caractérisé en ce qu'**une plaque de base (4) du détecteur présente des canaux de gaz combustible et de gaz de mesure (5 et 6) se réunissant en amont d'un point de sortie central (7) sur lequel débouche en outre un canal d'air comburant (8), le point de sortie (7) étant recouvert par une plaque céramique (9) et la plaque céramique (9) présentant un orifice d'injection de gaz combustible/de mesure (10), en liaison fluidique avec le point de sortie (7), et des orifices d'injection d'air comburant (11) disposés tout autour de ce dernier, qui sont en liaison fluidique avec le canal d'air comburant (8), qu'une plaque métallique (14) disposée à une distance sélectionnée (13) de la plaque céramique (9) présente une ouverture (15), située au-dessus de l'orifice d'injection de gaz combustible/de mesure (10), dans laquelle brûle la flamme (3), et que l'orifice d'injection de gaz combustible/de mesure (10) est entouré par une électrode de signal (16), qui est présente sur la plaque céramique (9) sous forme de piste conductrice et reliée à une sortie (17) de signaux de mesure, et que la plaque métallique (14) est reliée en tant qu'électrode d'absorption à une prise de tension continue (18).

2. Détecteur à ionisation de flamme suivant la revendication 1, **caractérisé en ce qu'**il est prévu au moins un autre canal de gaz combustible et de gaz de mesure (19 et 20) ainsi qu'un autre point de sortie (21) qui est recouvert par la plaque céramique (9), qui présente à cet effet un autre orifice d'injection de gaz combustible/de mesure (22), des orifices d'injection d'air comburant (23) et une électrode de signal séparée (24), la plaque métallique (14) présentant une autre ouverture (25) dans laquelle brûle la flamme (3).

3. Détecteur à ionisation de flamme suivant l'une des revendications 1 et 2, **caractérisé en ce que** la piste conductrice formant l'électrode de signal (16, 24) est fixée sur la plaque céramique (9) par application, dépôt en phase vapeur, impression, ou sous forme de conducteur découpé à la matrice.

4. Détecteur à ionisation de flamme suivant l'une des revendications 1 et 2, **caractérisé en ce que** les canaux de gaz de mesure (6, 20) sont reliés à une même source de gaz de mesure et que les sorties (17) des électrodes de signal sont interconnectées.
